# EUROPEAN PATENT APPLICATION

(11) **EP 2 108 250 A1**
(43) Date of publication of application: **14.10.2009**
(21) Application number: 08103505.7
(22) Date of filing: 11.04.2008
(51) Int. Cl.: A01G 7/00, A01G 27/00

(54) **System and process for controlling plant growth**

(71) Applicant: MinAqua ApS, 3400 Hillerød (DK)
(72) Inventor: Noack, Linda Elin, 2640, Hedehusene (DK); Fredsbo, Carsten, 2960, Rungsted Kyst (DK); Seidler, Carsten, 0363, Oslo (NO); Quist, Johannes Christian, 3400, Hillerød (DK); Anker, Poul Leo, 3460, Birkerød (DK)
(74) Representative: Holme Patent A/S

(57) **Abstract**

The present invention relates to a system (1) for controlling the growth of at least one plant (23) in a medium (24) by determining the moisture content and the aqueous concentration of at least one plant nutrient and by regulating said parameters. The present invention further relates to the use of such a system (1) for growing plants under controlled conditions.

## Description

The present invention relates to a system for controlling the growth of at least one plant in a medium by determining the moisture content and the aqueous concentration of at least one plant nutrient and by regulating said parameters. The present invention further relates to the use of such a system for growing plants under controlled conditions.

Growing and nurturing of plants under controlled conditions is a desired process within commercial and private gardening and horticulture. Plants generally have individual requirements as to the soil water content or the concentration of specific macro- and micro-nutrients. An efficient control on these parameters is therefore key to a successful nurturing of plants.

Small- and medium-scale plant nurturing is typically a non-automated, manual activity that is time-consuming and requires continuous effort and dedication. This goes both for the private use of, for example, ornamental plants, as well as for commercial gardening and plant nurturing such as in garden centers or plant shops.

This situation is complicated even more by the well-known fact that different plant species vary considerably with respect to their nutritional requirements and in their water availability demands. The permanent wilting point of a plant, that is, the soil moisture at which the plant will start to permanently wilt due to lack of water supply, varies from plant to plant, but also between different soil textures. A similar reasoning applies to nutrient requirements.

Accordingly, yet another variable that needs to be accounted for when striving towards optimal plant nurturing is the variation in growth media, such as different types of soils or solid substrates that have different water retentions, pore volumes, or nutrient sorption characteristics.

Other factors, which often vary thus making a controlled plant growth and nurturing process difficult, are the microclimate and the weather. These parameters are of special interest when considering situations in which hobbyists or professional gardeners are not available for a given time period, as may be the case during holidays or periods of illness. Temperature, precipitation, or hours of sunshine may change greatly over time leading the best-laid water-reserve schemes astray.

To date, several systems are known that try to overcome some of these problems. Numerous plant pot systems exist that provide one or more water reservoirs that differ in size, location and water transfer characteristics. A simple construction is, for example, a plant pot with one or more openings in its base which is placed onto a water-filled dish. Here, the plant may draw water from the dish through its own water consumption, which lowers the matric potential of the surrounding soil. Due to its simplicity this concept has several drawbacks such as the obvious limitations connected to the dish size and the openness of the water reservoir, as well as the fact that it does not account for the nutritional state of the plant.

U.S. Patent No. 6,345,470 discloses a self-contained automatic watering system for plants. The system comprises a nested plant pot assembly in which the pots together define an annular space, that may serve as a reservoir for water. A controller effects watering cycles using a motor and a pump. While the system may comprise a sensor for determining the fill-level of the water reservoir it does not account for the in-situ conditions of the soil with respect to moisture and/or nutrient concentrations.

U.S. Patent No. 7,110,862 provides an apparatus for digitally controlling a plant pot. The system comprises a moisture sensor and a liquid crystal display that indicates the moisture condition of the soil. Optionally, the system may contain a water tank connected to an electronic valve. A controller may effect the supply of water to the tank. The main drawback of this approach is that it does not account for nutrients, neither for their in-situ measurement nor for their supply to the plant.

In some situations it may be desirable to control the growth of a plant such that the plant is maintained at a state considerably different from its optimum growth conditions. This state may, for example, be a minimum growth state in which plant metabolism is maintained while actual growth is minimized. An approach like this may be of interest when preparing a large number of plants that are sold only at a special season. An example of this is *Euphorbia pulcherrima,* or poinsettia as it is commonly called. Poinsettia is predominantly in demand around Christmas.

U.S. Patent No. 4,340,414 discloses a solution for this requirement by providing a nutritional mixture that contains only trace quantities of phosphate. Thereby, the plant is kept in a "hibernation" state. The main drawback of this approach is the variation in nutritional and physiological requirements between different plant species. The desired effect may be achieved with one solution for a given species, but a different solution for another species. Also, water requirements may vary considerably between species and between different physiological minimum states of different species. Thus, an integrated moisture- and nutrient-control system is needed that is capable of custom-tailoring the desired physiological condition to the specific purpose and plant species.

Thus, it is a first aspect of the present invention to provide a system for controlling plant growth, the system accounting for moisture as well as for nutrients.

It is a second aspect of the present invention to provide a system for controlling plant growth that is sensitive to the in-situ soil conditions with respect to moisture and/or nutrient concentration.

It is a third aspect of the present invention to provide a system for controlling plant growth in a user-defined fashion, allowing for optimum growth conditions as well as for minimum conditions.

It is a fourth aspect of the present invention to provide an automated use of such a system.

It is a fifth aspect of the present invention to custom-tailor and regulate growth conditions for a wide variety of plant species.

The new and unique way in which the present invention fulfils the above-mentioned aspects is to provide a system for controlling the growth of at least one plant in a medium, said system comprising at least one cavity for accommodating the medium, at least one liquid reservoir, means for determining the moisture content of the medium, means for determining the aqueous concentration of at least one plant nutrient in the medium, and means for regulating the moisture content of the medium and the aqueous concentration of at least one plant nutrient in the medium.

The system according to the present inventions allows for an efficient and intelligent control of plant growth. It accounts for both changes in moisture and in nutrient concentration in the medium, which may be soil or any other plant supporting substrate. Through its determination and regulation means the system allows for an automated control of plant growth and nurturing. In embodiments where the system of the present invention comprises only one liquid reservoir, this liquid reservoir may be filled with an aqueous nutrient solution. This setup may allow for regulating both moisture content and nutrient concentration by supplying this liquid to the medium. Alternatively, embodiments comprising only one liquid reservoir may further comprise a reservoir containing a non-aqueous nutrient composition, for example dry fertilizer, and means for transferring the non-aqueous nutrient composition to the medium.

In a simple embodiment of the present invention the regulating means comprise a control unit for at least effecting and controlling transfer of liquid from the at least one liquid reservoir to the medium. The control unit is communicatively connected to the moisture content determination means and to the plant nutrient concentration determination means. In embodiments comprising a liquid reservoir containing water and an additional reservoir containing a non-aqueous nutrient composition, the control unit may effect and control transfer of water from the liquid reservoir to the medium, and transfer of the non-aqueous nutrient composition from the additional reservoir to the medium.

In a preferred embodiment of the present invention, the control unit further comprises a programmable device for at least saving and processing physiological data concerning one or more plant species. Thereby, the control unit is able to carry out one or more activities of the following non-exhaustive list: (i) receive data from both the moisture content determination means and the plant nutrient concentration determination means, to (ii) compare these data with stored plant physiological data on, for example, moisture and nutrient requirements, possibly as a function of soil texture, to (iii) assess the necessity of supplying additional water and/or nutrients to the medium and thereby to the plant, and to (iv) regulate these parameters by transferring water and/or nutrients to the medium.

The means for moisture content determination of the medium may, for example, include a sensor based on well-known soil moisture measurement techniques, such as electrical resistance measurements using gypsum blocks, neutron probe measurements, time-domain reflectometry (TDR) techniques or tensiometer approaches. The means for determining the aqueous concentration of at least one plant nutrient in the medium may, for example, include sensors that are based on electrochemical principles. A person skilled in the art will be able to choose one or more suitable types of sensors with respect to individual conditions, such as type of medium or nutrients of interest. It lies within the scope of the present invention to use a nutrient sensor that is capable of measuring a plurality of different compounds.

The nutrients of interest may be chosen from the group of compounds containing nitrogen, phosphorous, potassium, carbon, iron, calcium, manganese, molybdenum, sulphur, boron and zinc. Nutrient compositions used for regulating the aqueous concentration of one or more nutrients in the medium may, for example, be aqueous solutions of one or more salts containing one or more nutrients. Another contemplated option is a non-aqueous nutrient composition, for instance a dry fertilizer that is automatically supplied to the soil, for example through surface application. This type of fertilizer or nutrient composition will gradually dissolve in the soil water and can then be taken up by the roots of the plant.

According to a further embodiment of the present invention, the control unit is communicatively connected to one or more control valves for regulating the flux of liquid from the at least one liquid reservoir to the cavity. The control unit may effect the opening and shutting of the control valves for supplying water and/or aqueous nutrient solution to the medium. The communicative connection between the control unit and one or more valves may, for example, be an electric connection through wires, cables or the like. Alternatively, it may be a wireless connection.

In one embodiment of the present invention, the liquid reservoir is connected to one or more control valves by one or more conduits. The conduits transfer water or an aqueous nutrient solution to the valves, which, when opened by the control system, discharge the liquid into the medium. The valves may be mounted at the periphery of the cavity, at different vertical and horizontal locations. Thereby, different localities within the cavity may be regulated in an individual manner. This arrangement may be of particular benefit when using the system according to the present invention with different plant species.

In general, the driving force for the transfer of liquids, for example through conduits, may be created through different approaches. In one embodiment, the driving force is gravity and/or water pressure. Here, the mere opening of a control valve placed within, or at the periphery of, the cavity will lead to flow of liquid into the medium. In another embodiment, liquid flow is effected by a pump that is powered by, for example, a motor or by solar cells.

Optionally, one or more valves may extend well into the cavity as supported by, for example, rigid conduits between liquid reservoir and valves. Another contemplated arrangement is to place one or more valves above the cavity, so that any liquid draining from the valve precipitates onto the soil and percolates through the medium. If a non-aqueous nutrient composition is chosen, this type of valve would effect the strewing of the dry substrate onto the soil surface.

According to one embodiment, the system of the present invention comprises two liquid reservoirs, wherein the first reservoir contains water and the second reservoir contains an aqueous solution of at least one plant nutrient. The two reservoirs and their corresponding valves may be controlled independently of each other by the control unit. The control unit may receive two different signals; the first signal from the moisture sensor, and the second signal from a sensor for a given nutrient. The data from the sensors are then related to previously stored information on the physiological water requirements and/or nutrient requirements of the plant, whereupon the control unit effects the transfer of a given amount of liquid from one or both liquid reservoirs to the cavity and the medium.

In yet another embodiment, the system of the present invention comprises at least three liquid reservoirs, wherein the first reservoir contains water, the second reservoir contains an aqueous solution of a first plant nutrient, the third reservoir contains an aqueous solution of a second plant nutrient, and any additional reservoirs contain aqueous solutions of further plant nutrients. Each reservoir may be connected to one or more control valves that are placed within, or at the periphery of, the cavity. The system of this embodiment will advantageously comprise means for determining the aqueous concentration of at least two different nutrients, for example nitrate or phosphate. Sticking with this example, the second reservoir may contain an aqueous nitrate solution, whereas the third reservoir may contain an aqueous phosphate solution. When receiving data from the phosphate sensor indicating that the plant is not adequately supplied with phosphate, the control unit may effect the discharge of a given amount of phosphate-solution into the medium. The same principle of regulation may also apply to water and nitrate.

In accordance with a broad aspect of the present invention the afore-mentioned regulation may be performed as an interdependent process in which the control unit may use one or more algorithms for regulating plant growth conditions. Again referring to the afore-mentioned example, this algorithm may aid in determining the exact phosphate demand as a function of the current moisture content and the nitrate concentration. This principle may be extended to a number of additional nutrients, each of which may be measured by individual or collective sensors, and to data on light irradiation. Regulation algorithms may be based on multivariate statistical methods such as regression or principal component analysis, for which the control unit will advantageously be equipped with suitable computing capacity.

In another embodiment of the present invention, the system comprises means for mixing different liquids from at least two reservoirs prior to liquid transfer to the medium. These different liquids may, for example, be water and one or more nutrient solutions. The mixing process may be enabled by conduits that lead from the different reservoirs into a common mixing chamber. Each conduit may be equipped with at least one control valve for opening or shutting the flow of liquid towards the mixing chamber. The volume fractions of the individual liquids in the final mixture may advantageously be adjusted by means of the control unit, which controls the control valves and allows for custom-tailoring of a mixture that best meets the physiological requirements of the plant.

According to one embodiment of the present invention the system comprises a plant pot assembly with an inner and an outer plant pot, wherein the inner plant pot forms the cavity.

In a preferred embodiment, the liquid reservoir is an integral part of said plant pot assembly. This may be achieved by one or more cavities that are formed when assembling the plant pot assembly. Thus, one or more cavities may be present between the inner and the outer plant pot.

In a contemplated embodiment of the present invention the liquid reservoir extends below and along the sidewalls of the inner plant pot. The inner plant pot may be formed as a double-walled, hollow conical frustum. The annular cavity that is present between the double walls may be open at the base of the frustum's tapered end and may be closed at the base of the frustum's wide end. The central cavity of the hollow frustum may comprise a floor at its tapered end base. The floor allows for physical support of the plant and the medium, and is permeable to water. One or more plants may be placed into the central cavity of the hollow frustum together with an appropriate medium like soil. The inner pot may then be placed into an outer pot, which may be formed as a dish with a larger diameter than the diameter of the tapered end base of the frustum. The annular cavity of the inner pot may be filled with water or a nutrient solution by means of a check valve close to the upper end, that is, the wide end, of the frustum. Another check valve allows for exiting of gas from the annular cavity to the surroundings. During operation of this assembly water or nutrient solution will be successively transported from the annular cavity of the inner pot into the outer pot, and from there through the water permeable floor of the inner pot to the medium and eventually to the plant roots. As the liquid level in the annular cavity is lowered through this transport, a negative gas pressure is created in the headspace above the aqueous phase in the annular cavity. This negative pressure prevents, or slows down, further transport of liquid to the plant. Transport rates may then be enhanced by, for example, transferring additional liquid into the annular cavity through the check valve. Excess gas pressure building up in response to re-filling the liquid may be released through the gas check valve. This process is to be effected and regulated by the control unit.

In another embodiment, the inner and the outer plant pot are cast as one piece. The material may, for example, be a polymer, a metal, a metal alloy, clay, ceramic, or terracotta.

According to yet another contemplated embodiment of the present invention, the system further comprises means for rotating the cavity around its vertical axis. If the cavity is formed, for example, as a hollow cylinder, the vertical axis means the central axis of the cylinder. By rotating the cavity around its axis it may advantageously be achieved that the plant is, over time, illuminated from all sides, in situations where the light source is predominantly fixed in a given location. The rotating means may comprise a rotable plate or dish onto which a plant pot assembly is placed. The rotable plate may be driven by an electric motor, or any other rotation mechanism well-known in the art.

In a preferred embodiment, the system of the present invention comprises means for measuring the fill level of at least one liquid reservoir. The fill level of one or more liquid reservoirs, which may contain water or aqueous nutrient solutions, is measured by an appropriate sensor. Examples of such sensors are given in U.S. Patent 4,547,768, U.S. Patent No. 6,769,300, and U.S. Patent No. 7,260,987. Data on the fill level may advantageously be transmitted to the control unit. Similarly to the other data received and processed by the control unit, the data on fill levels of one or more liquid reservoirs may be further transmitted, for example through a wireless connection, to a computer, a mobile phone, or a personal digital assistant (PDA). Also, the control unit may be programmed such that it, in an automated fashion, effects re-filling of one or more reservoirs from one or more reserve containers.

According to yet another preferred embodiment of the present invention the system further comprises means for wireless communication of data on moisture in the medium, aqueous nutrient concentration in the medium, liquid transfer rates, radiation, and/or the fill level of one or more liquid reservoirs. Wireless data transmission may occur between different components of the system, for example fill level sensors and the control unit, and/or between the control unit and external devices, such as a computer, a mobile phone, or a PDA. Wireless data transmission may furthermore occur between the control unit and a network node, which may further transmit the data to a central server that saves the data in a database.

It lies within the scope of the present invention that the database may continuously gather and accumulate data from the system. Thereby, the database will become an increasingly powerful tool that may aid in improving the system's performance. The system of the present invention may consequently be a learning system, which, based on empirical data gathered during test runs, experiments, or regular operation, is able to classify different plant species into groups requiring the same or a similar treatment. The control unit thus may establish several optimized growth control programs that are custom-tailored to the growth requirements of these groups or classes.

In a further embodiment of the present invention the system comprises means for collecting and storing solar energy for powering the control unit and/or the control valves. These means may advantageously comprise solar cells and rechargeable batteries, and may further be used for powering any component of the system of the present invention.

In a preferred embodiment, the system of the present invention comprises radiometric measurement means. Advantageously, these means comprise one or more light sensors that are sensitive to photosynthetically active radiation (PAR), which is light with a wavelength of around 380 to 720 nm. The measured parameters may be the irradiance in watt per square meter and/or the spectral irradiance in watt per cubic meter. In an expedient embodiment, the system of the present invention comprises one or more of these light sensor, which are communicatively connected to the control unit. The data from the light sensors are, in combination with the other data such as data on moisture and nutrients, used by the control unit to determine the plant's need for water and/or nutrients. In a contemplated embodiment, the system may comprise means for reducing or excluding light from the plant, for example by mechanically closing an opaque lid over the cavity for accommodating the medium, wherein the opening and closing of the opaque lid is based on the aforementioned light data.

In another embodiment, the system of the present invention comprises a computer, a PDA, or a mobile phone for wirelessly communicating with the control system.

According to an expedient embodiment of the present invention, the system comprises one or more identification tags for storing and/or transmitting data on plant type, soil texture, nutrient and water requirements, moisture in the medium, aqueous nutrient concentration in the medium, liquid transfer rates, and/or the fill level of one or more liquid reservoirs. These identification tags may, for example, be radio frequency identification (RFID) tags. The tags may be mounted onto, or placed within, each cavity. These tags may be conveniently used for managing plant growth in a system with numerous plant cavities containing different plant species. They may carry information on the plant species, their physiological requirements, their history within the plant-growth control system, or any other data that may be of use to the person skilled in the art. Similarly, identification tags may be placed on different components of the system according to the present invention. Individual tags may be used for one or more liquid reservoirs or cavities. The tags may furthermore be arranged to communicate with a remote control.

Advantageously, the system of the present invention comprises a user interface which allows the user to input plant physiological data, to read data on soil moisture and nutrient concentrations, to manually override pre-programmed nurturing schemes, to effect transfer of water and or nutrients to the medium, and/or to visually inspect the system's history with respect to water and/or nutrient supplementation.

In a preferred embodiment, the system of the present invention is used for automatically controlling the growth of at least one plant in a medium, the use comprising the steps of monitoring the moisture content of the medium and the aqueous concentration of at least one plant nutrient within the medium, assessing water and nutrient demand of the plant by comparing the monitored data with plant physiological data saved in the programmable device of the control unit, and transferring water and/or at least one nutrient to the medium, wherein the transfer process is controlled by the control unit. Ideally, all data and processes are managed through the control unit. It may collect concentration data on, for example, nitrate or phosphate, soil moisture data, radiation data, or data on the fill level of one or more reservoirs, either liquid reservoirs or reservoirs filled with non-aqueous nutrient compositions. These data are used by the control unit, in combination with previously stored plant physiological data and potentially with previously stored soil texture data, to determine the water and nutritional requirements linked to a desired growth situation, for example optimum growth. The control unit then may effect the transfer of water and/or aqueous nutrient solution to the medium and eventually to the plant. The transfer may be accomplished by means of conduits and control valves that are, for example wirelessly, controlled by the control unit.

Another plant growth situation that may be conveniently achieved by using the system according to the present invention is minimum growth. As used herein, minimum growth refers to a plant's growth process which is sub-optimal, that is to say, slower than the optimal growth rate. This may be desired in situations when it is advantageous, for example from an economic point of view, to postpone plant growth. This may be achieved by programming the control unit to that end. The control unit may be programmed such that it consistently keeps one or more nutrients at sub-optimal aqueous concentrations. Alternatively or in addition, soil moisture may be regulated to that end. This use of the present system may be advantageous when growing bonsai plants.

In another embodiment of the present invention the transfer of water and/or at least one nutrient to the medium, which is controlled by the control unit, comprises the transfer of water from at least one water reservoir to the medium through at least one control valve, and the transfer of an aqueous solution comprising at least one nutrient to the medium through at least one control valve, wherein at least one transfer rate is based on the water and nutrient demand.

In another embodiment of the present invention the transfer of water and/or at least one nutrient to the medium, which is controlled by the control unit, comprises the transfer of water from at least one water reservoir to the medium through at least one control valve, and the transfer of a non-aqueous nutrient composition to the medium, wherein at least one transfer rate is based on the water and nutrient demand.

It lies within the scope of the present invention to control the growth of multiple plants in a single system with a central control unit. Industrial scale operation with hundreds or thousands of cavities and plant individuals is envisioned, the moisture and nutrient availability of which is centrally controlled and regulated. Such a system may comprise multiple sensors for soil moisture, aqueous nutrient concentration, and for light. It may further comprise a single or very few liquid reservoirs or single or very few non-aqueous nutrient composition reservoirs that supply the individual cavities with water and or nutrients, as regulated by the control unit.

The invention will be explained in greater detail below where further advantageous properties and example embodiments are described with reference to the drawing, in which
Fig. 1 shows a schematic cross-sectional view of one embodiment of the system of the present invention,
Fig. 2 shows a schematic cross-sectional view of another embodiment of the system of the present invention,
Fig. 3 shows a functional diagram of another embodiment of the system of the present invention, and
Fig. 4 shows a schematic view of another embodiment of the system of the present invention.

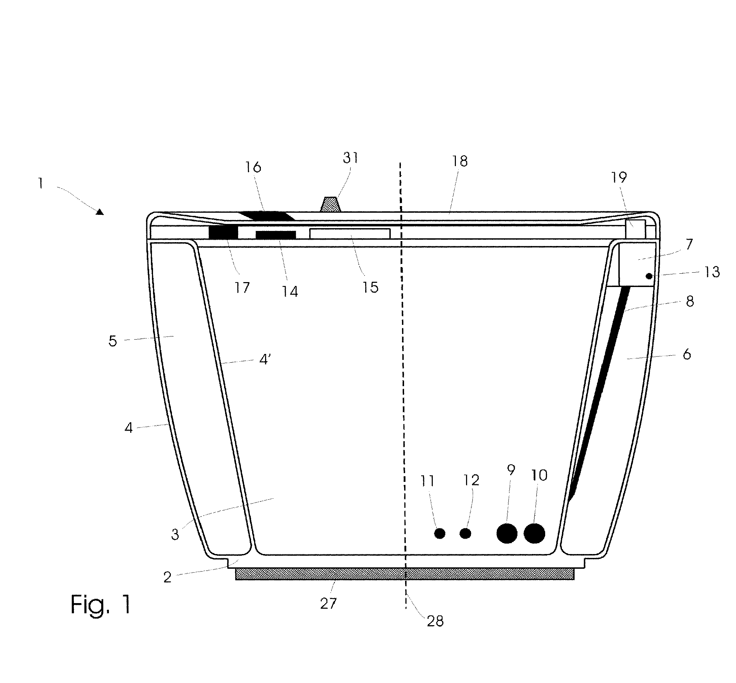

In the embodiment shown in Fig. 1, the system 1 for controlling plant growth comprises a plant container 2 with a central cavity 3 for receiving soil and one or more plants (not shown). The plant container 2 is double-walled in that it comprises an outer sidewall 4 and an inner sidewall 4'. Between these is formed an annular cavity 5 that surrounds the central cavity 3 as separated by the inner side wall 4'. In the embodiment shown in Fig. 1, the annular cavity 5 is used for accommodating a water reservoir 6, a nutrient reservoir 7, and a conduit 8. The nutrient reservoir 7 may contain an aqueous solution of one or more plant nutrients, for example, nitrate or phosphate. The nutrient reservoir 7 is via the conduit 8 connected to a first control valve 9, which may be used for discharging the nutrient solution into the central cavity 3. Similarly, the water reservoir 6 is via another conduit (not shown) connected to a second control valve 10. Within the central cavity 3 is placed a nutrient sensor 11 and a moisture sensor 12. The nutrient sensor 11 may determine the concentration of one or more plant nutrients, for example nitrate or other nitrogen-containing compounds. The moisture sensor 12 may determine the water content or moisture content of the soil. The system 1 in Fig. 1 further comprises a fill-level sensor 13 that is placed within the nutrient reservoir 7. The fill-level sensor 13 enables the accurate determination of the fill-level of the nutrient reservoir 7. The system 1 also comprises a light sensor 31 for measuring irradiation of PAR. All of the aforementioned valves 9, 10 and sensors 11, 12, 13, 31 are communicatively connected to a control unit 14. The control unit 14 comprises a programmable device (not shown), for example an integrated circuit, which allows for storing of plant physiological data. These physiological data may include optimum soil moisture levels, optimum nutrient concentrations, and optimum light conditions. The control unit 14 is able to read data on nutrient concentrations, moisture content, and light irradiance as transmitted by the nutrient sensor 11, the moisture sensor 12, and the light sensor 31, respectively. The control unit 14 is able to relate these data to the previously stored plant physiological data for determining the in-situ need for water and/or nutrients. The control unit 14 is furthermore able to effect discharge of water and/or nutrient solution from the water reservoir 6 and/or the nutrient reservoir 7 through the first control valve 9 and/or the second control valves 10. In the embodiment shown in Fig. 1 the driving force for this discharge is gravity, however, it lies with the scope of the present invention that other driving forces, for example the force exerted by a liquid pump, may be employed.

The communicative connection between the control unit 14 and the valves and the sensors, respectively, may be achieved through wires or through a wireless connection. The control unit 14 is furthermore communicatively connected to a wireless router 15 which may communicate with external devices such as a computer, a mobile phone, or a personal digital assistant (PDA). The wireless router 15 may communicate data on the in-situ soil conditions with respect to moisture or nutrient concentrations as well as data on the liquid discharge history or fill levels of the reservoirs. The system of Fig. 1 further comprises a solar panels module 16 and a rechargeable battery 17 that is connected to the solar panels module 16 and to the control unit 14 (connections not shown). The solar panels module 16 collects solar energy which is stored in the rechargeable battery 17. The latter supplies the power for maintaining the control unit 14 and its processes, such as opening or shutting of valves 9, 10. In the embodiment shown in Fig. 1, the control unit 14, the wireless router 15, the solar panels module 16, the light sensor 31, and the rechargeable battery 17 are integrated into a lid 18 which may be placed on top of the plant container 2. Advantageously, the lid 18 may be made of a translucent material that permits the passage of light. The lid 18 is different from the opaque lid discussed earlier. Yet another component integrated into the lid 18 is a RFID tag 19. The RFID tag 19 may be communicatively connected to the control unit 14, and may carry data on the plant species, its physiological requirements, the soil texture, and/or the plant's nurturing history. The lid 18 may furthermore serve the purpose of reducing moisture loss from the soil by reducing evapotranspiration. The embodiment shown in Fig. 1 further comprises rotational means 27, for example a rotational plate, for rotating the plant container 2, and thereby its central cavity 3, around its vertical axis 28.

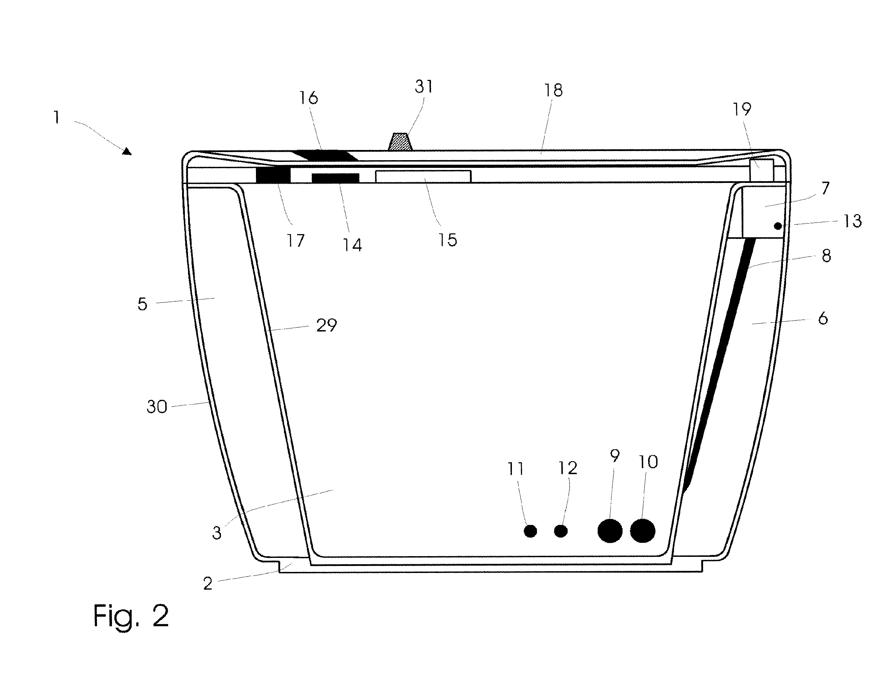

The embodiment shown in Fig. 2 differs from the one shown in Fig. 1 in that the system comprises a plant pot assembly of an inner plant pot 29 and an outer plant pot 30. Components that are identical to the ones shown in Fig. 1 are numbered as in Fig. 1. The inner plant pot 29 features a central cavity 3 for receiving soil and one or more plants (not shown). In between the two plant pots 29, 30 is formed an annular cavity 5 which may be used in the same way as in the embodiment of Fig. 1.

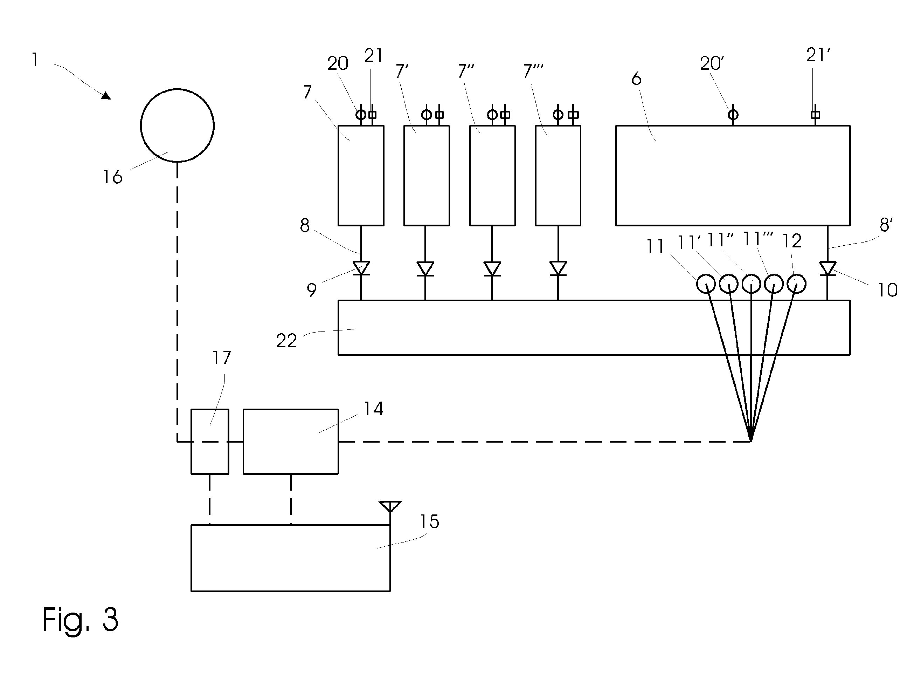

Fig. 3 shows a functional diagram of a further embodiment of system 1 of the present invention. The system 1 features four nutrient reservoirs 7, 7', 7'', 7''' which may each be filled with a different aqueous nutrient solution. Each nutrient reservoir 7, 7', 7'', 7''' features a gas valve 20 for exchanging gas with the atmosphere and a liquid inlet 21 for re-filling of liquid into the reservoir (exemplified only for reservoir 7 in Fig. 3). The system further comprises a water reservoir 6 which also features a gas valve 20' and a liquid inlet 21' that serve the same purpose as for the nutrient reservoirs 7, 7', 7'', 7'''. Each nutrient reservoir 7, 7', 7'', 7''' is connected to a mixed solution reservoir 22 via a conduit 8 and a first control valve 9 (exemplified only for reservoir 7 in Fig. 3). Similarly, the water reservoir 6 is connected to the mixed solution reservoir 22 via a conduit 8' and a second control valve 10. All control valves are controllable by the control unit 14. The latter is furthermore communicatively connected to a set of nutrient sensors 11, 11', 11'', 11''' and to a moisture sensor 12 placed within the soil. Each nutrient sensor 11, 11', 11'', 11''' is sensitive to a specific nutrient corresponding to the different solutions in the nutrient reservoirs 7, 7', 7'', 7'''. Other shown components include a solar panels module 16, a rechargeable battery 17, and a wireless router 15, all of which serve the same general purpose as in the embodiment shown in Fig. 1. During operation the control unit 14 acts as an interface between all the valves and the sensors. The valves may be opened or shut individually as dependent on the requirements of the plant. The resulting mixed solution in the mixed solution reservoir 22 may accordingly vary over time. The mixed solution is in contact with the soil in which one or more plants are placed. This contact may, for example, be achieved by placing the mixed solution reservoir 22 underneath the central cavity 3 of Fig. 1. Between the cavity and the reservoir may be placed a porous plate or a plate with holes, both of which allow capillar liquid transfer towards the soil and the plant.

The control unit 14 may furthermore be equipped with a user interface that allows the user to select different growth strategies, for example optimum growth, sub-optimal growth, or minimum growth. Accordingly, the control unit 14 will custom-tailor specific water and nutrient transfer rates that lead to the desired results for different plant species.

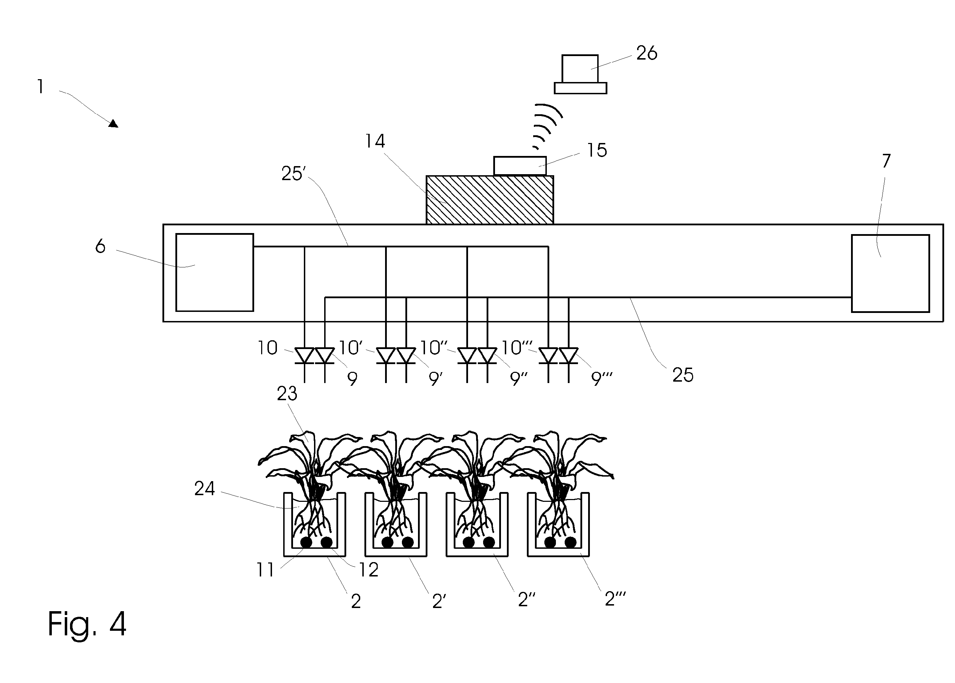

In the embodiment shown in Fig. 4 the system of the present invention comprises a set of plant containers 2, 2', 2", 2''' each of which contain a plant 23 and a medium 24, for example soil (exemplified only for plant container 2 in Fig. 4). Each plant container comprises a nutrient sensor 11 and a moisture sensor 12 (exemplified only for plant container 2 in Fig. 4). The system 1 further comprises a water reservoir 6 and a nutrient reservoir 7, neither of which is an integral part of the plant containers 2, 2', 2", 2'''. The nutrient reservoir 7 and the water reservoir 6 are via a first and a second conduit network 25, 25' connected to a first series of control valves 9, 9', 9'', 9''' and a second series of control valves 10, 10', 10", 10''', respectively. The system further comprises a control unit 14 that is connected to a wireless router 15 which may wirelessly communicate with a remote computer 26. The control unit 14 may effect opening and shutting of the control valves 9, 9', 9'', 9''', 10, 10', 10'', 10''', for example through wireless communication. The nutrient reservoir may contain an aqueous solution of one or more plant nutrients, or it may contain a non-aqueous nutrient composition, for example a dry fertilizer. The sensors 11, 12 may transmit data on the water content and the aqueous concentration of one or more nutrients to the control unit 14. The control unit 14 may identify the individual plant species present in the different plant containers 2, 2', 2", 2''' by accessing information on RFID tags that may be present on each of the plant containers 2, 2', 2'', 2''' (RFID tags not shown in Fig. 4). Although the embodiment in Fig. 4 only shows four plant containers, any additional number of plant containers lie within the scope of the present invention.

While in the embodiment in Fig. 4 several of the system's components are physically separated from each other it is certainly contemplated to include all components of the system as integral parts of a single plant container. This may be implemented by using double- or triple-walled plant containers with one or more internal cavities. Into these cavities components like liquid reservoirs or a control unit may be placed. Alternatively, one or more components of the system may be releasably or permanently attached to the exterior of a plant container.

The system according to the present invention allows for a precise and efficient control of plant growth since it takes into account important in-situ parameters and furthermore comprises means to manipulate soil moisture and nutrient concentrations. The combination with the sensor arrangement allows for a detailed monitoring of the moisture and nutrient concentration changes effected by the system.

## Claims

1. A system (1) for controlling the growth of at least one plant (23) in a medium (24), said system comprising
- at least one cavity (3) for accommodating the medium (24),
- at least one liquid reservoir,
- means for determining the moisture content of the medium (24),
**characterized in that** the system further comprises
- means for determining the aqueous concentration of at least one plant nutrient in the medium (24),
- means for regulating the moisture content of the medium and the aqueous concentration of at least one plant nutrient in the medium (24).

2. The system (1) according to claim 1, **characterized in that** the regulating means comprise a control unit (14) for at least effecting and controlling transfer of liquid from the at least one liquid reservoir to the medium (24), wherein the control unit (14) is communicatively connected to the moisture content determination means and to the plant nutrient concentration determination means.

3. The system (1) according to claim 2, **characterized in that** the control unit (14) comprises a programmable device for at least saving and processing physiological data concerning one or more plant species.

4. The system (1) according to claims 2 or 3, **characterized in that** the control unit (14) is communicatively connected to one or more control valves (9, 10) for regulating the flux of liquid from the at least one liquid reservoir to the cavity (3).

5. The system (1) according to any one of claims 1-4, **characterized in that** the system (1) comprises two liquid reservoirs (6, 7), wherein the first reservoir (6) contains water and the second reservoir (7) contains an aqueous solution of at least one plant nutrient.

6. The system (1) according to any one of claims 1-5, **characterized in that** the system (1) comprises at least three liquid reservoirs, wherein the first reservoir (6) contains water, the second reservoir (7) contains an aqueous solution of a first plant nutrient, the third reservoir (7') contains an aqueous solution of a second plant nutrient, and any additional reservoirs (7'', 7''') contain aqueous solutions of further plant nutrients.

7. The system (1) according to any one of claims 1-6, **characterized in that** the system (1) comprises means for mixing different liquids (22) from at least two reservoirs prior to liquid transfer to the medium.

8. The system (1) according to any one of claims 1-7, **characterized in that** the system (1) further comprises radiometric measurement means (31).

9. The system (1) according to any one of claims 1-8, **characterized in that** the system (1) further comprises means for rotating (27) the cavity around its vertical axis (28).

10. The system (1) according to any one of claims 1-9, **characterized in that** the system (1) further comprises means for measuring the fill level of at least one liquid reservoir.

11. The system (1) according to any one of claims 1-10, **characterized in that** the system (1) further comprises means for wireless communication of data on moisture in the medium, aqueous nutrient concentration in the medium, liquid transfer rates, and/or the fill level of one or more liquid reservoirs.

12. The system (1) according to any one of claims 1-11, **characterized in that** the system (1) further comprises one or more identification tags (19) for storing and/or transmitting data on plant type, soil texture, nutrient and water requirements, moisture in the medium, aqueous nutrient concentration in the medium, liquid transfer rates, and/or the fill level of one or more liquid reservoirs

13. An automated use of the system (1) according to any one of claims 1-12 for controlling the growth of at least one plant in a medium, the use comprising the steps of
- monitoring the moisture content of the medium and the aqueous concentration of at least one plant nutrient within the medium,
- assessing water and nutrient demand of the plant by comparing the monitored data with plant physiological data saved in the programmable device of the control unit, and
- transferring water and/or at least one nutrient to the medium, wherein the transfer process is controlled by the control unit.

14. The use of claim 13 **characterized in that** the transfer process, which is controlled by the control unit (14), comprises
- the transfer of water from at least one water reservoir to the medium through at least one control valve,
- the transfer of an aqueous solution comprising at least one nutrient to the medium through at least one control valve,
wherein at least one transfer rate is based on the water and nutrient demand.

15. The use of claim 14, **characterized in that** the transfer process, which is controlled by the control unit (14), comprises
- the transfer of water from at least one water reservoir to the medium through at least one control valve,
- the transfer of a non-aqueous nutrient composition to the medium,
wherein at least one transfer rate is based on the water and nutrient demand.
